# EUROPEAN PATENT APPLICATION

(11) **EP 4 424 508 A1**
(43) Date of publication of application: **04.09.2024**
(21) Application number: 24160685.4
(22) Date of filing: 29.02.2024
(51) Int. Cl.: B32B 27/08, B32B 27/12, B32B 27/40, C08J 5/12, C08L 29/14, C09J 7/35, B32B 27/30, C09J 7/21

(54) **BINDING TAPE FOR THE PRODUCTION OF PROTECTIVE DEVICES OR SCREENS AND RELATED PROTECTIVE DEVICE OR SCREEN**

(30) Priority: 03.03.2023 IT 202300003921
(71) Applicant: T.S. S.r.l., 41123 Modena (MO) (IT)
(72) Inventor: ANGELINI, Claudio, 41121 MODENA (IT)
(74) Representative: Scipioni, Luca

(57) **Abstract**

A binding tape (1) used in the production of protective devices or screens, comprising: a first layer (10) intended to come into contact with the fabric (104) and made from a first heat-sealing material; a second layer (11) made of fibreglass. The first material (10) is an aqueous dispersion of a polymer.

## Description

This invention relates to a binding tape for the production of protective devices or screens and the related protective device.

In the sector of binding tapes used for fabrics (that is, sheets of fabric) some prior art solutions include a structural layer, made from fibreglass, since this material has good strength properties.

A layer of PVC is then placed over this layer in order to allow welding the two edges of the binding tape when the binding tape is folded around a retaining edge of the fabric.

The use of PVC has some specific disadvantages, which are basically linked to the welding process. In effect, PVC has a high melting point and relatively long cooling times. Thus, in the welding process used to make the device, there is much downtime due to having to reach the welding temperature (which is directly correlated with the melting point) and then cooling the welded material.

Solutions which have the disadvantages just described are described in the following prior art documents: EP1647627A2, EP1605093A1, WO0177246A1 and WO2017024211A1.

The aim of this invention is to provide a binding tape and a protective device or screen to overcome the above-mentioned drawbacks of the prior art.

This aim is fully achieved by the binding tape and by the protective device or screen of this disclosure as characterized in the appended claims.

According to one aspect of it, this disclosure provides a binding tape for the production of protective devices or screens.

The binding tape extends along a longitudinal direction. The binding tape defines a strip of material.

The strip of material comprises a first layer. The first layer is intended to come into contact with the fabric (that is, with the sheet of fabric). The first layer is intended to be welded to the fabric. The first layer is made from a first heat-sealing material.

The strip of material comprises a second layer. The second layer is made preferably of fibreglass. Other types of material might also be used, for example, polymeric fabric, organic fibre or other solutions having acceptable mechanical strength.

According to a first advantageous aspect, the first material is an aqueous dispersion of a polymer.

Using an aqueous dispersion of a polymer allows reducing welding times (compared to the prior art) because of the lower melting point and less time for cooling.

It is stressed that, for the purposes of this disclosure, use of an aqueous dispersion in itself constitutes an improvement in that it reduces the melting point and the cooling time compared to the prior art solutions. Indeed, the other specifications set out below regard additional advantages, obtained by further analysing the solution and conducting additional tests. Thus, the more specific embodiments described herein provide even more perceptible advantages but also, more generally speaking, the very use of an aqueous dispersion of a polymer solves a technical problem in a way in which none of the prior art documents even suggests it can solve.

In an embodiment, the first material is an aqueous dispersion of a polyurethane polymer.

In an embodiment, the first material is an aqueous dispersion of a copolymer. Preferably, the copolymer is an acetate copolymer.

Still more advantageously, the copolymer is a vinyl ester acetate copolymer. In this embodiment, the technical effects are even more extraordinary, with further reductions of welding times in comparison to the other polymers and/or copolymers used.

This type of copolymer also allows providing a solid, lasting grip on the fabric, which is not the case with a generic copolymer, for example on account of the low compatibility with the range of usable fabrics.

Yet another technical advantage is that such a copolymer has a very high compatibility with a wide range of additives, such as anti-foam, plasticizing and/or coalescing agents, which allow the binding tape to be adapted to specific requirements, when necessary.

In an embodiment, the first material has a pH at 25°C of between 3 and 10, preferably between 4 and 9, still more preferably two distinct intervals of between 3 and 6 or between 7 and 9.

Preferably, the aqueous dispersion has a solid content of between 25% and 60%, preferably between 40% and 60% and still more preferably, between 45% and 55%. These values further enhance the above-mentioned advantages of accelerating the welding process.

In particular, the aqueous dispersion has a solid content of between 30% and 40% when it is an aqueous dispersion of a polymer (preferably a polyurethane).

In an embodiment, the strip comprises a third layer, on the side of the second layer opposite the first layer.

The third layer is preferably made from a different material than the first material.

In an embodiment, the third layer is made from a resin. Preferably, the resin is a polyurethane resin.

In an embodiment, the third layer is made from an aqueous, anionic dispersion, preferably based on a copolymer. More specifically, the copolymer might be a vinyl acrylic copolymer, preferably a self-crosslinkable copolymer.

According to an aspect of it, this disclosure provides a protective device or screen.

The protective device or screen comprises a screening or protective fabric, including a retaining edge.

The protective device or screen comprises a retaining groove. The retaining groove is made from a portion of a binding tape according to any of the features described in this disclosure with reference to the binding tape.

In particular, said portion of binding tape is folded around the retaining edge to define a first lobe and a second lobe. The respective first layer of the first and the second lobe is in contact with a respective side of the fabric, so as to allow the first and the second lobe to be welded to the retaining edge which is interposed between the first and the second lobe.

According to one aspect of it, this disclosure provides a method for making a binding tape for the production of a fabric used in the production of protective devices or screens.

The method comprises a step of providing a strip of fibreglass. The method comprises a step of applying a first heat-sealing material to one side of the strip of fibreglass, to define a first layer intended to come into contact with the fabric.

The first material to be applied an aqueous dispersion of a polymer, preferably an acetate copolymer, preferably vinyl ester acetate.

These and other features will become more apparent from the following description of a preferred embodiment, illustrated purely by way of nonlimiting example in the accompanying drawings, in which:

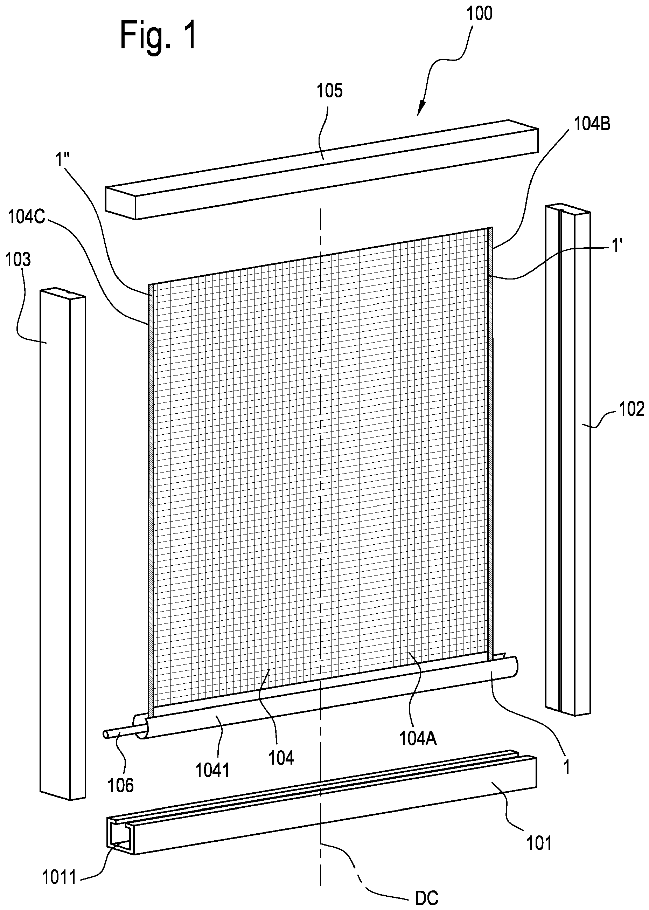

- Figure 1 shows a schematic, exploded view of a protective device or screen;

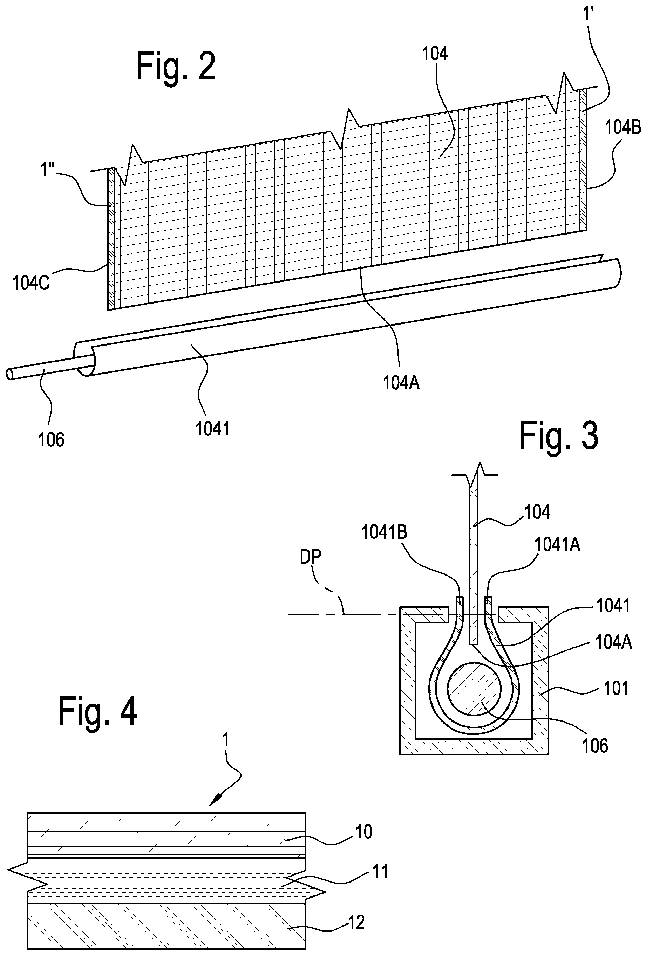

- Figure 2 schematically illustrates a piece of fabric and a binding tape of a protective device or screen;
- Figure 3 shows a schematic cross section of a detail of the protective device of Figure 1;
- Figure 4 shows a schematic cross section of a binding tape used in the production of the device of Figure 1.

With reference to the accompanying drawings, the numeral 100 denotes a protective device and/or screen. For example, the protective device and/or screen 100 is a mosquito net, a vertical curtain, a sunshade, a space partition or the like.

The protective device 100 comprises a frame 100' and a fabric 104, which slides relative to the frame 100' to vary the area of the surface covered or protected.

In an embodiment, the fabric 104 is made from plastic material, for example fibreglass covered with PVC. In an embodiment, the fabric 104 is made from organic material. In an embodiment, the fabric 104 is made from synthetic material. In an embodiment, the fabric 104 is made in the form of a net, for example, when its purpose is to protect. In an embodiment, the fabric 104 is a seamless fabric, without gaps in it, for example, when its purpose is to cover.

The frame 100' comprises a first lateral guide 102 and a second lateral guide 103, which are located at the sides of the fabric 104. The frame also comprises an upper bar 105, to which the first and second lateral guides 102, 103 are connected.

The frame 100' comprises a slide bar 101, configured to slide along the first and second lateral guides 102, 103 along a covering direction DC.

The slide bar 101 comprises a channel 1011, configured to receive the fabric 104. That way, the fabric 104 is constrained to the slide bar 101 and moves as one therewith.

Also provided are mechanisms for gathering the fabric which, when the slide bar 101 is lifted, roll the fabric 104 around a rolling axis.

The fabric 104 comprises a retaining edge 104A. The fabric 104 comprises a first lateral edge 104B and a second lateral edge 104C.

The first lateral edge 104B and the second lateral edge 104C comprise respective lateral reinforcements 1', 1" obtained by adding reinforcing material.

The reinforcing material placed on the first lateral edge 104B and on the second lateral edge 104C is made from portions of a binding tape 1, including one or more of the features described below.

At its retaining edge 104A, the fabric 104 comprises a retaining groove 1041. The retaining groove 1041 is made from a portion of the binding tape 1, including one or more of the features described below.

The device 100 also comprises an interference element 106, for example a stop rod 106, which is inserted into the retaining groove 1041, to hold it in place in the channel 1011 of the slide bar 101.

The lateral reinforcements 1', 1" of the first and the second lateral edge 104B, 104C are made by placing a respective flat portion of binding tape 1 on the first and the second lateral edge 104B, 104C. Next, each flat portion of binding tape 1 is welded to the first and the second lateral edge 104B, 104C of the fabric 104.

The retaining groove 1041 is made from a portion of binding tape 1 that is folded around the retaining edge 104A. Folding it this way forms a first lobe 1041A and a second lobe 1041B, each facing a respective connecting surface of the retaining edge 104A of the fabric 104. The two lobes are pushed along a pressing direction DP so that the first lobe 1041A, the second lobe 1041B and the retaining edge 104A come into contact with each other. Next, the first lobe 1041A, the second lobe 1041B and the retaining edge 104A are welded to each other to define the retaining groove 1041.

The retaining groove 1041 of the retaining edge 104 is housed in the channel 1011 and the stop rod 106 is then inserted into the retaining groove 1041 to allow the fabric 104 to be held in place in the slide bar 101.

The binding tape 1 used to make the lateral reinforcements and the retaining groove 1041 is generally made in rolls. The binding tape 1 has a planar shape, in the form of a flat strip having thickness and length. The thickness and width of the binding tape used for the lateral reinforcements are less than the thickness and width of the binding tape 1 used for the retaining groove.

The binding tape 1 is a multilayer tape, that is to say, one including a plurality of superposed layers of material. There may be two layers of material but preferably there are three.

The binding tape 1 comprises a first layer 10. The first layer 10 is intended to come into contact with the fabric 104 when the binding tape is welded to the fabric 104.

The first layer 10 is made from a first heat-sealing material.

The strip of material comprises a second layer 11. The second layer 11 is made preferably of fibreglass. Other types of material might also be used, for example, polymeric fabric, organic fibre or other solutions having acceptable mechanical strength.

Lastly, the strip of material comprises a third layer 12. The third layer 12 is located on the side of the second layer 11 opposite the first layer 10. The third layer 12 is preferably made from a different material than the first material, for example, from polyurethane resin.

The first material, on the other hand, is an aqueous dispersion of a polymer. Preferably, the aqueous dispersion is an aqueous dispersion of a copolymer, such as an acetate copolymer, for example.

Still more advantageously, the copolymer is a vinyl ester acetate copolymer. In an embodiment in which the first material is an aqueous dispersion of a polymer, the first material has a pH at 25°C of between 6 and 10, preferably between 7 and 9. In an embodiment in which the first material is an aqueous dispersion of a copolymer, the first material has a pH at 25°C of between 3 and 6, preferably between 4 and 5.

Preferably, the aqueous dispersion has a solid content of between 30% and 40%. In particular, the aqueous dispersion has a solid content of between 30% and 40% when it is an aqueous dispersion of a polymer (preferably a polyurethane). In an embodiment, the aqueous dispersion has a solid content of between 40% and 60%, preferably between 45% and 55% and still more preferably, between 47% and 53%. These percentage contents are particularly effective in aqueous dispersions of copolymers (acetates).

It is stressed that the specifications referred to the aqueous dispersion of a polymer (solid content, pH, type of polymer) are single properties which, even if taken individually, can provide respective advantages in terms of reducing welding and cooling times. These properties, therefore, can be protected individually (because they improve the solution) but also in combination with each other in that they have a particularly enhancing, synergic effect.

## Claims

1. A binding tape (1, 1', 1") for the production of a fabric (104) used in protective devices or screens, the binding tape (1) extending along a longitudinal direction and defining a strip of material,
wherein the strip of material comprises:
- a first layer (10) intended to come into contact with the fabric (104) and made from a first heat-sealing material;
- a second layer (11) made of fibreglass,
**characterized in that** the first material (10) is an aqueous dispersion of a polymer.

2. The binding tape (1) according to claim 1, wherein the first material is an aqueous dispersion of a copolymer.

3. The binding tape (1) according to claim 2, wherein the copolymer is an acetate copolymer.

4. The binding tape (1) according to claim 3, wherein the copolymer is a vinyl ester acetate copolymer.

5. The binding tape (1) according to claim 4, wherein the first material (10) has a pH of between 4 and 9 at 25°C.

6. The binding tape (1) according to claim 5, wherein the aqueous dispersion has a solid content of between 25% and 60%.

7. The binding tape (1) according to claim 1, wherein the first material (10) is an aqueous dispersion of a polyurethane polymer, with a solid content of between 25% and 45%.

8. The binding tape (1) according to any one of the preceding claims, comprising a third layer (12), opposite the first layer (10) with respect to the second layer (11) and made of a material different from the first material (10).

9. The binding tape (1) according to claim 8, wherein the third layer (12) is made from a polyurethane resin or from a copolymer-based, anionic aqueous dispersion.

10. A protective device or screen (100), comprising:
- a protective or screen fabric (104), including a retaining edge (104A);
- a retaining groove (1041) made with a portion of a binding tape (1) according to any one of the preceding claims,
wherein said portion is folded around the retaining edge (104A) to define a first lobe (1041A) and a second lobe (1041B), the respective first layer (10) of which is in contact with a respective side of the fabric (104) so as to allow the first and the second lobes (1041A, 1041B) to be welded to the retaining edge (104A), which is interposed between the first and the second lobe (1041A, 1041B).

11. A method for producing a binding tape (1) used in the production of a fabric (104) for protective devices or screens, comprising the following steps:
- providing a strip of fibreglass (11);
- applying a first heat-sealing material to one side of the strip of fibreglass (11), to define a first layer (10) intended to come into contact with the fabric (104),
wherein the first material applied in the step of applying is an aqueous dispersion of a polymer.
